# EUROPEAN PATENT SPECIFICATION

(11) **EP 3 770 096 B1**
(45) Date of publication and mention of the grant of the patent: **25.10.2023**
(21) Application number: 19214901.1
(22) Date of filing: 10.12.2019
(51) Int. Cl.: B66B 7/06, D07B 1/16, B29C 70/70, B29D 29/00

(54) **ELEVATOR LOAD BEARING MEMBER HAVING A JACKET INCLUDING A FLUOROPOLYMER**
AUFZUGSLASTTRAGELEMENT MIT EINEM MANTEL MIT EINEM FLUORPOLYMER
ÉLÉMENT DE SUPPORT DE CHARGE D'ASCENSEUR COMPORTANT UNE GAINE COMPRENANT UN POLYMÈRE FLUORÉ

(30) Priority: 22.07.2019 US 201916517946
(43) Date of publication of application: 27.01.2021
(73) Proprietor: OTIS Elevator Company, Farmington, CT 06032 (US)
(72) Inventor: ZHAO, Chen Qian, Farmington, CT Connecticut 06032 (US)
(74) Representative: Dehns

(56) References cited:
- EP-A1- 3 447 019
- WO-A1-2007/050069
- US-A1- 2015 259 176
- US-A1- 2018 162 695

## Description

### BACKGROUND

A variety of elevator systems are known. Some elevator systems use a hydraulic arrangement for moving the elevator car. Others are traction-based and include roping that suspends the elevator car and a counterweight. A machine causes movement of a traction sheave that, in turn, causes movement of the roping for moving the elevator car as desired.

For many years, roping in elevator systems included round steel ropes. More recently, flat belt technologies were developed that provided advantages over traditional, round steel rope arrangements. Even with the advancement, those skilled in the art have been striving to improve elevator load bearing member technology.

EP 3 447 019 discloses an elevator belt with a coating layer and base material layer.

### SUMMARY

An elevator load bearing member is provided in accordance with claim 1.

In an example embodiment having one or more features of the elevator load bearing member of the previous paragraph, the fluoropolymer portion completely encases the inner portion.

In an example embodiment having one or more features of the elevator load bearing member of any of the previous paragraphs, the fluoropolymer portion comprises tetrafluoroethylene-ethylene copolymer

In an example embodiment having one or more features of the elevator load bearing member of any of the previous paragraphs, a ratio of an amount of a material of the inner portion to an amount of fluoropolymer is in a range from 1:2 to 1:40.

In an example embodiment having one or more features of the elevator load bearing member of any of the previous paragraphs, the ratio is in a range from 1:5 to 1:20.

In an example embodiment having one or more features of the elevator load bearing member of any of the previous paragraphs, the ratio is 1:8 to 1:15, e.g. 1:8 or 1:15.

A method of making an elevator load bearing member is provided in accordance with claim 7.

In an example embodiment having one or more features of the method of the previous paragraph, the forming and the establishing are performed by coextruding a material of the inner portion and the fluoropolymer of the fluoropolymer portion.

An example embodiment having one or more features of the method of any of the previous paragraphs includes separately forming the inner portion and at least one layer of fluoropolymer material and laminating the at least one layer and the formed inner portion

The various features and advantages of at least one disclosed example embodiment will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system including a load bearing member designed according to an embodiment of this invention.
Figure 2 schematically illustrates an example embodiment of an elevator load bearing member.
Figure 3 schematically illustrates selected features of a process for making an elevator load bearing member like that shown in Figure 2.
Figure 4 schematically illustrates another example embodiment of a process for making an elevator load bearing member like that shown in Figure 2.

### DETAILED DESCRIPTION

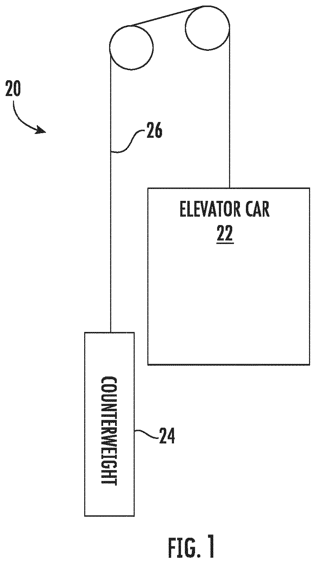

Figure 1 schematically shows selected portions of an elevator system 20. An elevator car 22 and counterweight 24 are suspended by a load bearing member 26. A traction sheave 28 associated with a machine (not specifically illustrated) selectively controls movement of the load bearing member 26 to control the movement or position of the elevator car 22. For illustration purposes, a single load bearing member 26 is represented in Figure 1. Multiple load bearing members would be included in many embodiments.

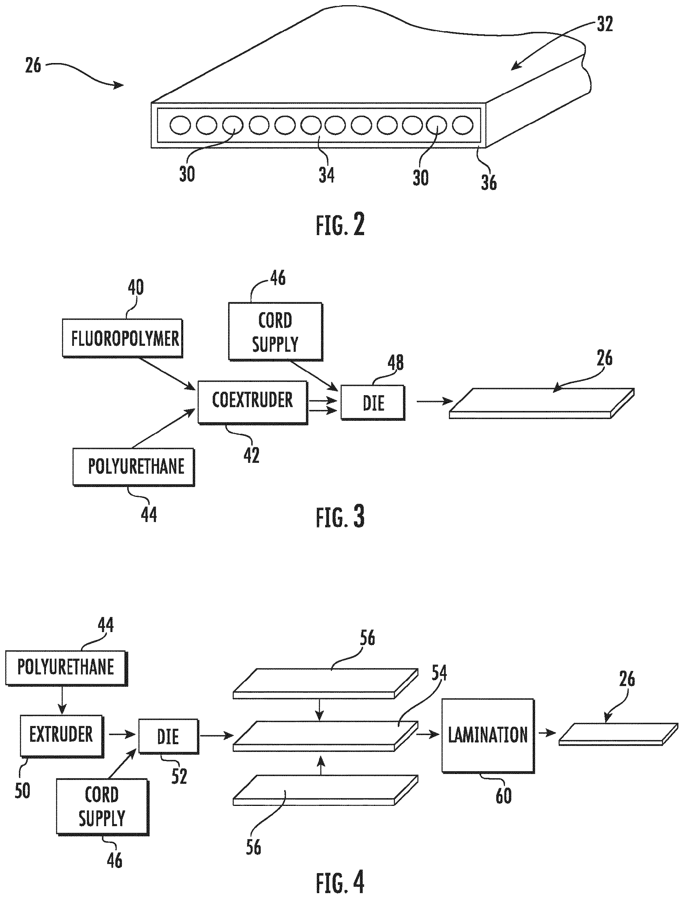

Figure 2 schematically illustrates an example load bearing member 26 including a plurality of load bearing cords 30 that are at least partially surrounded by a jacket 32. The cords 30 may comprise a variety of materials that are useful for supporting the loads of the elevator system 20. In some embodiments, the cords 30 comprise steel and each include a plurality of wires. Other embodiments include cords 30 made of aluminum, carbon fiber, or liquid crystal polymer, for example.

The jacket 32 includes an inner portion or layer 34 that is received against the cords 30. The inner portion 34 comprises a compressible material that provides good adhesion with the cords 30 to provide adequate pullout strength to maintain the desired configuration of the load bearing member 26 over its useful life. Example embodiments include inner portions 34 that comprise at least one of polyurethane, polyamide, polyester, or ethylene propylene diene monomer rubber (EPDM).

The jacket 32 also includes a fluoropolymer portion or layer 36 that establishes a fire-resistant exterior of the jacket 32. In the illustrated embodiment, the fluoropolymer portion 36 surrounds the first portion 34 and establishes the entire exterior of the jacket 32. The fluoropolymer portion 36 is self-extinguishing and resistant to igniting, melting or dripping when exposed to fire or other high-temperature conditions. Including the fluoropolymer portion 36 gives fire-resistant properties to the load bearing member 26 while establishing an exterior surface on the jacket 32 that provides the necessary traction for controlling the movement and position of the elevator car 22.

The fluoropolymer portion 36 in at least some embodiments also improves the wear characteristics of the jacket 32, which can extend the useful life of the load bearing member 26. For example, a fluoropolymer has superior hardness, breaking stress and tensile elongation at break properties compared to a polyurethane so a jacket including an exterior fluoropolymer portion 36 has superior wear characteristics compared to previously used jacket materials. Moreover, the fluoropolymer portion 36 provides better mechanical performance properties for such a jacket compared to blends of polyurethanes with fire-retardant agents.

The fluoropolymer in an example embodiment comprises tetrafluoroethylene-ethylene copolymer. Another example embodiment includes a perfluoroalkoxy alkane, such as copolymer of tetrafluoroethylene and a perfluorinated vinyl ether that has been functionalized to include an adhesive group within the polymer backbone. Such materials do not melt or drip when exposed to flame and give the jacket 32 excellent fire resistant properties including the ability to maintain the geometry of the load bearing member 26.

The fluoropolymer material in one aspect of the claimed invention comprises a functional fluoropolymer including a functional group comprising at least one of anhydride, silane, glycidyl, isocyanate, and optionally carboxylic acid, amine, and amide.

Figure 3 schematically illustrates an example method of making the example load bearing member 26. A resin of the fluoropolymer material 40 of the fluoropolymer portion 36 is fed into a coextruder 42 along with a resin of the material 44 of the inner portion 34, which is polyurethane in the illustrated example embodiment. The cords 30 are fed from a cord supply 46 into a die 48. The coextruder 42 coextrudes the inner portion 34 onto the cords 30 in a first or inner section of the die 48 and the fluoropolymer portion 36 onto the inner portion 34 in a second or outer section of the die 48. The adhesion properties of the materials used in the coextrusion are sufficient to secure the fluoropolymer portion 36 to the inner portion 34 without requiring additional adhesive layers between them.

Another example method is illustrated in Figure 4. In this embodiment, the resin of the material 44 of the inner portion 34 is fed into an extruder 50 that extrudes the inner portion 34 onto the cords 30 within a die 52. The resulting structure 54 includes cords 30 encased in the polyurethane material. Preformed layers 56 of fluoropolymer are situated against the structure 54 and laminated together at 60. The resulting load bearing member 26 includes the fluoropolymer portion 36 surrounding the inner portion 34 as shown in Figure 2, for example.

The jacket 32 may include various amounts of the respective materials of the inner portion 34 and the fluoropolymer portion 36. A ratio of the amount of inner portion 34 material to the amount of fluoropolymer portion 36 material in the jacket 32 is in a range from 1:2 to 1:40. An example embodiment includes a ratio of those materials in the range from 1:5 to 1:20. One example embodiment has a preferred ratio of 1:8 or 1: 15.

A load bearing member designed according to an embodiment of this invention may have a different configuration than the flat belt style of load bearing member in the illustrations and described above. For example, the load bearing member may have a round cross-section.

Including a fluoropolymer portion as the exterior of the jacket provides smoke-suppressant and fire-resistant properties including avoiding dripping or melting of the jacket 32. The fluoropolymer provides such protection along with superior mechanical performance compared to elevator load bearing member jacket compositions that attempted to incorporate fire resistant materials in to a blend with a polyurethane or other jacket material.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. An elevator load bearing member (26), comprising:
a plurality of load bearing cords (30); and
a jacket (32) at least partially surrounding the cords (30), the jacket (32) including an inner portion (34) received against the cords (30) and a fluoropolymer portion (36) that establishes a fire-resistant exterior of the jacket (32);
**characterized in that** the fluoropolymer portion (36) comprises a functional fluoropolymer and/or a copolymer of tetrafluoroethylene and a perfluorinated vinyl ether;
wherein the functional fluoropolymer comprises a functional group comprising at least one of anhydride, silane, glycidyl and isocyanate.

2. The elevator load bearing member (26) of claim 1, wherein the fluoropolymer portion (36) completely encases the inner portion (34).

3. The elevator load bearing member (26) of claim 1 or claim 2, wherein the fluoropolymer portion (36) comprises tetrafluoroethylene-ethylene copolymer

4. The elevator load bearing member (26) of any preceding claim, wherein a ratio of an amount of a material of the inner portion (34) to an amount of fluoropolymer is in a range from 1:2 to 1:40.

5. The elevator load bearing member (26) of claim 4, wherein the ratio is in a range from 1:5 to 1:20.

6. The elevator load bearing member (26) of claim 5, wherein the ratio is 1:8 or 1: 15.

7. A method of making an elevator load bearing (26) member, the method comprising:
forming an inner portion (34) of a jacket (32) on a plurality of load bearing cords (30); and
establishing a fire-resistant fluoropolymer portion (36) on the inner portion (34) to define an exterior of the jacket (32);
**characterized in that** the fluoropolymer portion (36) comprises a functional fluoropolymer and/or a copolymer of tetrafluoroethylene and a perfluorinated vinyl ether;
wherein the functional fluoropolymer comprises a functional group comprising at least one of anhydride, silane, glycidyl and isocyanate.

8. The method of claim 7, wherein the forming and the establishing are performed by coextruding a material of the inner portion (34) and the fluoropolymer of the fluoropolymer portion (36).

9. The method of claim 7, comprising
separately forming the inner portion (34) and at least one layer of fluoropolymer material; and
laminating the at least one layer and the formed inner portion (34).

## Patentansprüche

1. Aufzugslasttragelement (26), umfassend:
eine Vielzahl lasttragender Schnüre (30); und
einen Mantel (32), der die Schnüre (30) mindestens teilweise umgibt, wobei der Mantel (32) einen inneren Abschnitt (34), der gegen die Schnüre (30) aufgenommen wird, und einen fluorpolymeren Abschnitt (36), der eine feuerfeste Außenseite des Mantels (32) herstellt, beinhaltet;
**dadurch gekennzeichnet, dass** der fluorpolymere Abschnitt (36) ein funktionelles Fluorpolymer und/oder ein Copolymer aus Tetrafluorethylen und einem perfluorierten Vinylether umfasst;
wobei das funktionelle Fluorpolymer eine funktionelle Gruppe umfasst, die mindestens eines von Anhydrid, Silan, Glycidyl und Isocyanat umfasst.

2. Aufzugslasttragelement (26) nach Anspruch 1, wobei der fluorpolymere Abschnitt (36) den inneren Abschnitt (34) vollständig umschließt.

3. Aufzugslasttragelement (26) nach Anspruch 1 oder Anspruch 2, wobei der fluorpolymere Abschnitt (36) Tetrafluorethylen-Ethylen-Copolymer umfasst.

4. Aufzugslasttragelement (26) nach einem der vorhergehenden Ansprüche, wobei ein Verhältnis einer Menge eines Materials des inneren Abschnitts (34) zu einer Menge eines Fluorpolymers in einem Bereich von 1:2 bis 1:40 liegt.

5. Aufzugslasttragelement (26) nach Anspruch 4, wobei das Verhältnis in einem Bereich von 1:5 bis 1:20 liegt.

6. Aufzugslasttragelement (26) nach Anspruch 5, wobei das Verhältnis 1:8 oder 1:15 beträgt.

7. Verfahren zum Herstellen eines Aufzugslasttragelements (26), wobei das Verfahren Folgendes umfasst:
Bilden eines inneren Abschnitts (34) eines Mantels (32) auf eine Vielzahl von lasttragenden Schnüren (30); und
Herstellen eines feuerfesten fluorpolymeren Abschnitts (36) an dem inneren Abschnitt (34), um eine Außenseite des Mantels (32) zu definieren;
**dadurch gekennzeichnet, dass** der fluorpolymere Abschnitt (36) ein funktionelles Fluorpolymer und/oder ein Copolymer aus Tetrafluorethylen und einem perfluorierten Vinylether umfasst;
wobei das funktionelle Fluorpolymer eine funktionelle Gruppe umfasst, die mindestens eines von Anhydrid, Silan, Glycidyl und Isocyanat umfasst.

8. Verfahren nach Anspruch 7, wobei das Bilden und das Herstellen durch Coextrudieren eines Materials des inneren Abschnitts (34) und des Fluorpolymers des fluorpolymeren Abschnitts (36) durchgeführt werden.

9. Verfahren nach Anspruch 7, ferner umfassend:
separates Bilden des inneren Abschnitts (34) und mindestens einer Schicht aus Fluorpolymermaterial; und
Laminieren der mindestens einen Schicht und des geformten inneren Abschnitts (34).

## Revendications

1. Élément de support de charge d'ascenseur (26), comprenant :
une pluralité de cordons de support de charge (30) ; et
une gaine (32) entourant au moins partiellement les cordons (30), la gaine (32) comportant une partie interne (34) reçue contre les cordons (30) et une partie en polymère fluoré (36) qui établit un extérieur ignifuge de la gaine (32) ;
**caractérisé en ce que** la partie en polymère fluoré (36) comprend un polymère fluoré fonctionnel et/ou un copolymère de tétrafluoroéthylène et d'éther vinylique perfluoré ;
dans lequel le polymère fluoré fonctionnel comprend un groupe fonctionnel comprenant au moins un anhydride, un silane, un glycidyle et un isocyanate.

2. Élément de support de charge d'ascenseur (26) selon la revendication 1, dans lequel la partie en polymère fluoré (36) enveloppe complètement la partie interne (34).

3. Élément de support de charge d'ascenseur (26) selon la revendication 1 ou la revendication 2, dans lequel la partie en polymère fluoré (36) comprend un copolymère tétrafluoroéthylène-éthylène.

4. Élément de support de charge d'ascenseur (26) selon une quelconque revendication précédente, dans lequel un rapport d'une quantité d'un matériau de la partie interne (34) à une quantité de fluoropolymère est dans une plage de 1:2 à 1:40.

5. Élément de support de charge d'ascenseur (26) selon la revendication 4, dans lequel le rapport est dans une plage de 1:5 à 1:20.

6. Élément de support de charge d'ascenseur (26) selon la revendication 5, dans lequel le rapport est de 1:8 ou 1:15.

7. Procédé de fabrication d'un élément de support de charge d'ascenseur (26), le procédé comprenant :
la formation d'une partie interne (34) d'une gaine (32) sur une pluralité de cordons de support de charge (30) ; et
la mise en place d'une partie en polymère fluoré ignifuge (36) sur la partie interne (34) pour définir un extérieur de la gaine (32) ;
**caractérisé en ce que** la partie en polymère fluoré (36) comprend un polymère fluoré fonctionnel et/ou un copolymère de tétrafluoroéthylène et d'éther vinylique perfluoré ;
dans lequel le polymère fluoré fonctionnel comprend un groupe fonctionnel comprenant au moins un anhydride, un silane, un glycidyle et un isocyanate.

8. Procédé selon la revendication 7, dans lequel la formation et la mise en place sont réalisées par coextrusion d'un matériau de la partie interne (34) et du polymère fluoré de la partie en polymère fluoré (36).

9. Procédé selon la revendication 7, comprenant :
la formation séparée de la partie interne (34) et au moins une couche de matériau en polymère fluoré ; et
la stratification de l'au moins une couche et de la partie interne formée (34).
